(19)

Europäisches
Patentamt
European
Patent Office
Office européen
des brevets

(11) **EP 3 950 375 A1**

(12) **EUROPEAN PATENT APPLICATION**
published in accordance with Art. 153(4) EPC

(43) Date of publication:
**09.02.2022 Bulletin 2022/06**

(21) Application number: **20782679.3**

(22) Date of filing: **12.03.2020**

(51) International Patent Classification (IPC):
**B44C 1/17** *(2006.01)*     **C09D 5/00** *(2006.01)*
**C09D 201/00** *(2006.01)*     **B32B 37/26** *(2006.01)*

(52) Cooperative Patent Classification (CPC):
**B32B 37/26; B44C 1/17; C09D 5/00; C09D 201/00**

(86) International application number:
**PCT/JP2020/010939**

(87) International publication number:
**WO 2020/203160 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2019 JP 2019068826
24.10.2019 JP 2019193739**

(71) Applicant: **NITTO DENKO CORPORATION
Ibaraki-shi
Osaka 567-8680 (JP)**

(72) Inventors:
• **SHIMOKAWA Kayo
Ibaraki-shi, Osaka 567-8680 (JP)**

• **MAKIHATA Yosuke
Ibaraki-shi, Osaka 567-8680 (JP)**
• **ENDO Asuka
Ibaraki-shi, Osaka 567-8680 (JP)**
• **NAKAO Eriko
Ibaraki-shi, Osaka 567-8680 (JP)**
• **OKADA Kenichi
Ibaraki-shi, Osaka 567-8680 (JP)**
• **OBAN Ryohei
Ibaraki-shi, Osaka 567-8680 (JP)**
• **ISHIGURO Shigeki
Ibaraki-shi, Osaka 567-8680 (JP)**

(74) Representative: **Müller-Boré & Partner
Patentanwälte PartG mbB
Friedenheimer Brücke 21
80639 München (DE)**

(54) **LAMINATED BODY MANUFACTURING METHOD, PAINTING OBJECT MANUFACTURING METHOD, JOINING STRUCTURE MANUFACTURING METHOD, THERMAL TRANSFER SHEET, AND LAMINATED BODY**

(57)     The present invention relates to a method for manufacturing a laminate, including a laminating step of laminating a side of a thermal transfer layer of a thermal transfer sheet having a release sheet and the thermal transfer layer on at least a part of a surface of a resin member by heat bonding, in which the release sheet has a thermal expansion coefficient $\beta$ of $-15\% \leq \beta \leq +7.5\%$ at a molding temperature $T\beta°C$ in the laminating step.

**FIG. 3**

EP 3 950 375 A1

**Description**

TECHNICAL FIELD

The present invention relates to a method for manufacturing a laminate, a method for manufacturing a coated article, a method for manufacturing a bonded structure, a thermal transfer sheet, and a laminate.

BACKGROUND ART

In recent years, resin which is lightweight and excellent in impact pair is used as a member such as a transport machine such as a railway vehicle, an aircraft, a ship, an automobile, and the like, an electronic device, or a house facility, and an adherend made of various materials is bonded to the surface of the member. In addition, a coating film having various functions may be formed on the resin member.

When the resin member is joined to an adherend such as a metal or another resin, sufficient adhesive strength is required. In addition, when a coating film is applied to the resin member, various resins are used as the base polymer in the coating film, and the adhesion between the resin member and the coating film is required to be strengthened in order to prevent the coating film from peeling.

However, some types of the resin member and the adherend is difficult to conform to the adhesive, therefore a sufficient adhesive strength may not be obtained even when a conventional adhesive or an adhesive sheet is used. In addition, when the resin member is directly coated, the compatibility is poor depending on the type of the resin member and the coating film, sufficient adhesive strength between the resin member and the coating film cannot be obtained, and problems such as unevenness and peeling of the coating film may occur.

As means for obtaining sufficient adhesive strength, there are known various surface treatment methods such as a primer treatment (for example, Patent Literature 1) in which a primer solution is applied to a surface of a resin member, and a sandblast treatment, a corona treatment, and a plasma treatment as a pretreatment.

As one of means for imparting sufficient adhesive strength to the resin member, there is a technique using a surface modifier sheet.

For example, Patent Literature 2 describes a surface modified sheet capable of imparting sufficient adhesive strength to a thermoplastic resin.

CITATION LIST

PATENT LITERATURE

Patent Literature 1: JP-A-2000-226536
Patent Literature 2: JP-A-2017-128722

SUMMARY OF INVENTION

TECHNICAL PROBLEM

In the conventional surface treatment method described in Patent Literature 1, a surface treatment step and a drying step have to be provided, and there is a problem that the productivity is reduced.

Further, when a molding process of the resin member with a mold is performed, it is necessary to use a release agent, but since the surface of the resin member is contaminated by the release agent, a coating film having a sufficient strength cannot be formed on the surface of the resin member by the primer treatment. Therefore, a cleaning treatment step and a polishing treatment step for removing the release agent are required. As a result, there is a problem of cost increase such as equipment investment and running cost for performing these steps.

On the other hand, according to the film in-mold molding described in Patent Literature 2, the surface treatment of the resin member can be performed without using a release agent during a molding process. However, there is a problem that depending on the molding temperature, wrinkles are generated in the release sheet during the molding process, and the transference of the wrinkles to the surface of the thermal transfer layer lead to impair the appearance of the obtained laminate. In addition, the surface-treated resin member may be subjected to coating or bonding with an adherend, and therefore high adhesive strength and high coating adhesion to an adherend are required.

In view of the above problems, it is an object of the present invention to provide a method for manufacturing a laminate capable of preventing occurrence of wrinkles, forming a laminate with excellent appearance, imparting high adhesiveness and coating adhesion, and further integrally molding a thermal transfer layer and a resin member at the time of forming a laminate, and a method for manufacturing a coated article and a method for manufacturing a bonded structure using the laminate obtained by the method for manufacturing the laminate. Another object of the present invention is to provide a thermal transfer sheet suitable for a method for manufacturing the laminate, and a laminate including the thermal transfer sheet.

SOLUTION TO PROBLEM

The present inventor has intensively studied to solve the above problems. As a result, the present inventors have found that heat bonding of a thermal transfer sheet in which a thermal expansion coefficient of the release sheet is set to a specific range to a resin member enable to exhibit high adhesive strength and high coating adhesion, to prevent generation of wrinkles, to form a laminate excellent in appearance, and to integrally mold the thermal transfer layer and the resin member at the time of forming the laminate, and the present invention has been completed.

That is, the present invention relates to the following [1] to [14].

[1] A method for manufacturing a laminate, comprising a laminating step of laminating a side of a thermal transfer layer of a thermal transfer sheet having a release sheet and the thermal transfer layer on at least a part of a surface of a resin member by heat bonding, wherein

the release sheet has a thermal expansion coefficient $\beta$ of $-15\% \leq \beta \leq +7.5\%$ at a molding temperature $T\beta°C$ in the laminating step.

[2] The method for manufacturing a laminate according to [1], wherein the release sheet has a tensile elastic modulus $E\beta$ of $1 \times 10^4$ MPa or less at the molding temperature $T\beta°C$.

[3] The method for manufacturing a laminate according to [1] or [2], wherein the thermal transfer layer has an average thickness of 0.1 $\mu$m to 50 $\mu$m.

[4] The method for manufacturing a laminate according to any one of [1] to [3], wherein in the laminating step, the heat bonding is performed by heat pressing.

[5] A method for manufacturing a coated article, comprising: a coating film forming step of peeling off the release sheet from the laminate obtained by the method for manufacturing a laminate according to any one of [1] to [4] and forming a coating film on the thermal transfer layer which is exposed.

[6] A method for manufacturing a bonded structure, comprising: a bonding step of peeling off the release sheet from the laminate obtained by the method for manufacturing a laminate according to any one of [1] to [4] and bonding an adherend onto the thermal transfer layer which is exposed via an adhesive layer.

[7] A thermal transfer sheet, comprising: a release sheet and a thermal transfer layer, wherein

the release sheet has a thermal expansion coefficient $\alpha$ of $-15\% \leq \alpha \leq +7.5\%$ at $T\alpha°C$ represented by the following formula (1):

$$T\alpha°C = \text{melting temperature or decomposition temperature of a release sheet}$$
$$(Tm)°C - 10°C \ (1).$$

[8] The thermal transfer sheet according to [7], wherein the release sheet has a tensile elastic modulus $E\alpha$ of $1 \times 10^4$ MPa or less at the $T\alpha°C$.

[9] The thermal transfer sheet according to [7] or [8], wherein the thermal transfer layer has an average thickness of 0.1 $\mu$m to 50 $\mu$m.

[10] The thermal transfer sheet according to any one of [7] to [9], wherein the thermal transfer layer contains a polymer component, and the polymer component contains at least one type of a polymer having a non-polar unit and a polar unit having a polar group, and a polymer obtained by modifying a part of a polymer composed of a non-polar unit with a polar unit having a polar group.

[11] The thermal transfer sheet according to [10], wherein the polymer component contains at least one type selected from the group consisting of a methoxymethyl group-containing polymer, a hydroxyl group-containing polymer, a carboxyl group-containing polymer, and an amino group-containing polymer.

[12] The thermal transfer sheet according to any one of [7] to [11], wherein the thermal transfer sheet is used for heat bonding.

[13] A laminate, comprising:

the thermal transfer sheet according to any one of [7] to [12], and
a resin member laminated on a side of the thermal transfer layer of the thermal transfer sheet.

[14] The laminate according to [13], wherein the resin member is a prepreg.

ADVANTAGEOUS EFFECTS OF INVENTION

According to the method for manufacturing a laminate according to one aspect of the present invention, it is possible to prevent the occurrence of wrinkles, to form a laminate excellent in appearance, to impart high adhesiveness and coating adhesion, and further to integrally mold the thermal transfer layer and the resin member at the time of forming the laminate.

In addition, the laminate according to one aspect of the present invention is excellent in adhesive strength to a coating film or an adherend, can prevent occurrence of wrinkles, and can form a resin molded article having excellent appearance.

According to the method for manufacturing a coated article and the method for manufacturing a bonded structure according to one aspect of the present invention, a coated article and a bonded structure having excellent strength and excellent appearance can be obtained.

BRIEF DESCRIPTION OF DRAWINGS

Fig. 1 is a schematic cross-sectional view showing an example of a laminate in which a thermal transfer layer is installed on a surface of a resin member;
Fig. 2 is a schematic cross-sectional view showing an example of a thermal transfer sheet;
Fig. 3 is a schematic cross-sectional view showing a form in which a side of a thermal transfer layer of a thermal transfer sheet which is a laminate of a release sheet and a thermal transfer layer is placed on at least a part of a surface of a resin member;
Fig. 4 is a schematic cross-sectional view showing an example of a coated article.
Fig. 5 is a schematic cross-sectional view showing an example of a bonded structure.
Fig. 6 is a schematic perspective view of a bonded structure used for an evaluation of shear adhesive strength.

DESCRIPTION OF EMBODIMENTS

Hereinafter, an embodiment of the present invention will be described in detail.

<Method for Manufacturing Laminate>

A method for manufacturing a laminate according to an embodiment of the present invention includes a laminating step of laminating a side of a thermal transfer layer of a thermal transfer sheet having a release sheet and a thermal transfer layer on at least a part of a surface of a resin member by heat bonding. Here, in the method for manufacturing a laminate, the release sheet has a thermal expansion coefficient $\beta$ of $-15\% \leq \beta \leq +7.5\%$ at a molding temperature $T\beta°C$ in the laminating step.

[Thermal Transfer Sheet]

A thermal transfer sheet used in a method for manufacturing a laminate according to an embodiment of the present invention includes a release sheet and a thermal transfer layer. Here, since the thermal transfer layer in the thermal transfer sheet is in the form of a sheet, the thermal transfer layer can be integrally molded not by being coated on the surface of the member but by being placed and heat-treated.

Therefore, it is possible to prevent the occurrence of unevenness due to the occurrence of cissing or the like and to form the thermal transfer layer with a uniform thickness on the surface of the member. In addition, when the thermal transfer layer is formed on a part of the surface of the member, it is possible to suppress a decrease in yield due to protrusion or the like.

[Release Sheet]

In the method for manufacturing a laminate according to the embodiment of the present invention, the release sheet in the thermal transfer sheet has the thermal expansion coefficient $\beta$ of $-15\% \leq \beta \leq +7.5\%$ at the molding temperature $T\beta°C$ in the laminating step.

From the viewpoint of appearance after molding, the thermal expansion coefficient $\beta$ at the molding temperature Tβ°C of the release sheet is -15% or more, preferably -13% or more, and more preferably -10% or more. Further, since it is sufficient to have heat resistance to the molding process temperature, the thermal expansion coefficient β at the molding temperature Tβ°C of the release sheet is 7.5% or less, preferably 6% or less, and more preferably 5% or less.

The tensile elastic modulus Eβ at the molding temperature Tβ°C of the release sheet is preferably $1 \times 10^4$ MPa or less, more preferably $4 \times 10^3$ MPa or less due to the curved surface followability at the time of molding.

By setting the tensile elastic modulus Eβ at the molding temperature Tβ°C to $1 \times 10^4$ MPa or less, the release sheet is excellent in heat resistance and easily exhibits curved surface followability, and for example, even in the case of molding using a mold having a curved surface shape or the like, it is easy to follow the shape of the mold. As a result, it is possible to provide a thermal transfer sheet which can prevent occurrence of wrinkles and transfer defects, have excellent appearance, and form a laminate by integral molding with a resin member.

The lower limit of the tensile elastic modulus Eβ at the molding temperature Tβ°C is not particularly limited, but the lower limit of the tensile elastic modulus Eβ is preferably 1 MPa or more, and more preferably 10 MPa or more, in order to obtain a thermal transfer sheet that can easily exhibit curved surface followability and can be applied to a member having a complicated three-dimensional curved surface shape.

The tensile elastic modulus refers to a tensile elastic modulus measured by the following method using a resin film composed of a resin material constituting the measurement target portion as a measurement sample. Specifically, a test piece was prepared by cutting the release sheet into a strip shape having a width of 5 mm with the flow direction (MD direction) at the time of film formation as a longitudinal direction. The distance between chucks was set to 10 mm, and the temperature was dispersed at 25°C to 600°C in a tensile viscoelasticity measurement device RSAIII manufactured by TA Instruments. At this time, the temperature increase rate was 5°C/min, and the frequency was 1 Hz. At this time, the storage elastic modulus at Tβ°C was taken as the tensile elastic modulus Eβ.

The tensile elastic modulus can be adjusted by a configuration of the release sheet, the material used, a combination thereof, or the like.

Examples of the release sheet usable for the thermal transfer sheet include polyester-based sheets such as polyethylene terephthalate, polyethylene naphthalate, and polybutylene terephthalate, polyamide-based sheets such as polyamide 6, polyamide 66, and aromatic polyamide, and polyimide-based sheets such as aromatic polyimide. The method of molding the release sheet is not particularly limited, but the release sheet may be formed by a melt extrusion method, a melt rolling method, a solution casting method, or the like, and may be further uniaxially stretched or biaxially stretched.

The thickness of the release sheet is preferably 5 μm or more, more preferably 10 μm or more, still more preferably 20 μm or more, and still more preferably 30 μm or more, from the viewpoint of handleability and processability. In addition, the thickness of the release sheet is preferably 300 μm or less, more preferably 200 μm or less, and still more preferably 100 μm or less in order to provide a thermal transfer sheet which can easily exhibit curved surface followability and can also be applied to a member having a complicated three-dimensional curved surface shape.

As necessary, a release treatment with an appropriate release treatment agent such as silicone may be performed on the surface of the side of the thermal transfer layer of the release sheet or on both surfaces of the release sheet.

[Thermal Transfer Layer]

The thermal transfer layer (which may be a material of the thermal transfer layer) preferably contains a polymer component which contains at least one type of a polymer having a non-polar unit and a polar unit having a polar group and a polymer obtained by modifying a part of a polymer composed of a non-polar unit with a polar unit having a polar group. The content ratio of the polymer component in the thermal transfer layer is preferably 50 mass% to 100 mass%, more preferably 70 mass% to 100 mass%, still more preferably 90 mass% to 100 mass%, particularly preferably 92 mass% to 100 mass%, most preferably 95 mass% to 100 mass%.

Examples of the non-polar unit in the polymer component include an aliphatic hydrocarbon unit, an aromatic hydrocarbon unit, and an alicyclic hydrocarbon unit. The number of carbon atoms of the non-polar unit is preferably from 2 to 40, more preferably from 3 to 30, still more preferably from 4 to 20. The non-polar units may be used alone or in combination of two or more of these.

Examples of the polar unit having a polar group in the polymer component include an epoxy group, a carboxyl group, a nitrile group, an amide group, an ester group, a hydroxyl group, an acid anhydride, and a silanol group. Examples of the polar unit having such a polar group include a glycidyl methacrylate unit, a vinyl acetate unit, an acrylonitrile unit, an amide unit, a (meth) acrylic acid ester unit, a hydroxyethyl (meth) acrylate unit, and a maleic anhydride unit. The polar units may be used alone or in combination of two or more of these.

The polymer component that may be contained in the thermal transfer layer (may be the material of the thermal transfer layer) may be at least one type selected from the group consisting of a methoxymethyl group-containing polymer, a hydroxyl group-containing polymer, a carboxyl group-containing polymer, and an amino group-containing polymer.

Such a polymer component that may be contained in the thermal transfer layer (may be the material of the thermal transfer layer) is preferably an addition type curing agent, and more preferably an addition type curing agent that is allowed to react with an epoxy group.

Examples of the methoxymethyl group-containing polymer include a methoxymethylated polyamide resin.

As the methoxymethyl group-containing polymer, a commercially available product may be used. Examples of such commercially available products include "Fine Resin" (registered trademark) FR-101, FR-104, FR-105, EM-120, and EM-220 series (manufactured by Namariichi Co., Ltd.).

The methoxymethyl group-containing polymer may be used alone or in combination of two or more of these.

The methoxymethyl group-containing polymer has a weight average molecular weight (Mw) of preferably from 1,000 to 1,000,000, more preferably from 3,000 to 500,000, still more preferably from 5,000 to 100,000, particularly preferably from 7,000 to 70,000, and most preferably from 10,000 to 50,000, from the view of being able to further exhibit the effects of the present invention. The method for measuring the weight average molecular weight (Mw) will be described later.

Examples of the hydroxyl group-containing polymer include a hydroxyl group-containing acrylic polymer.

As the hydroxyl group-containing polymer, a commercially available product may be used. Examples of such commercially available products include "ARUFON (registered trademark) UH-2000 series" (manufactured by Toagosei Co., Ltd.).

The hydroxyl group-containing polymers may be used alone or in combination of two or more of these.

The weight average molecular weight (Mw) of the hydroxyl group-containing polymer is preferably from 500 to 1,000,000, more preferably from 700 to 500,000, still more preferably from 1,000 to 100,000, particularly preferably from 1,500 to 70,000, and most preferably from 2,000 to 50,000, from the view of being able to further exhibit the effect of the present invention. The method for measuring the weight average molecular weight (Mw) will be described later.

Examples of the carboxyl group-containing polymer include a carboxyl group-containing acrylic polymer and a carbonxyl group-containing acrylic oligomer.

As the carboxyl group-containing polymer, a commercially available product may be used. Examples of such commercially available products include "ARUFON (registered trademark) UC-3000, UC3510, and UC3080 series" (manufactured by Toagosei Co., Ltd.).

The carboxyl group-containing polymer may be used alone or in combination of two or more of these.

The weight average molecular weight (Mw) of the carboxyl group-containing polymer is preferably from 500 to 1,000,000, more preferably from 700 to 500,000, still more preferably from 1,000 to 100,000, particularly preferably from 1,500 to 70,000, and most preferably from 2,000 to 50,000, from the view of being able to further exhibit the effect of the present invention. As the weight average molecular weight (Mw), the polystyrene equivalent molecular weight in the GPC measurement was used.

As the amino group-containing polymer, any suitable polymer can be adopted as long as the polymer contains an amino group (-NH2) and the effects of the present invention are not impaired.

As the amino group-containing polymer, a commercially available product may be used.

The amino group-containing polymers may be used alone or in combination of two or more of these.

The thermal transfer layer (which may be a material of the thermal transfer layer) may contain at least one type selected from the group consisting of a tertiary amine-containing compound and a strong acid.

The tertiary amine-containing compound or the strong acid which may be contained in the thermal transfer layer (which may be the material of the thermal transfer layer) is preferably a catalyst type curing agent, more preferably a catalyst type curing agent which is allowed to react with an epoxy group.

Examples of the tertiary amine-containing compound include imidazole derivatives and polyethyleneimine.

As the tertiary amine-containing compound, a commercially available product may be used. Examples of such commercially available products include "CUREZOL" series (imidazole-based epoxy resin curing agent, manufactured by Shikoku Chemical Co., Ltd.) as imidazole derivatives, and "EPOMIN" (registered trademark) series (manufactured by Nippon Shokubai Co., Ltd.) as polyethyleneimine.

The tertiary amine-containing compounds may be used alone or in combination of two or more of these.

Examples of the strong acid include trifluoroborane, an ionic liquid, and Nafion.

Examples of the ionic liquid include $BF_3$-$C_2H_5NH_2$ and HMI-$PF_6$.

As the strong acid, a commercially available product may be used.

The strong acid may be used alone or in combination of two or more of these.

In the embodiment of the present invention, the thermal transfer layer preferably has an average thickness of 0.1 $\mu$m to 50 $\mu$m.

When there is a pinhole on the surface of the member, the appearance of the resin member obtained by the subsequent coating or the like is impaired. In the embodiment of the present invention, since the average thickness of the thermal transfer layer is 0.1 $\mu$m to 50 $\mu$m, it is preferable that unevenness such as pinholes on the surface of the member is filled and a more excellent appearance can be obtained.

When the thickness of the thermal transfer layer is 0.1 $\mu$m to 50 $\mu$m, the thermal transfer layer appropriately flows during thermoforming. Therefore, sliding property can be imparted to the release sheet and the followability to the mold shape is improved. Thus, the thickness of the thermal transfer layer is preferably 0.1 μm to 50 μm.

The average thickness of the thermal transfer layer is more preferably 0.5 μm or more, and even more preferably 0.7 μm or more, from the viewpoint of filling unevenness such as pinholes on the surface of the member and obtaining a more excellent appearance.

The average thickness of the thermal transfer layer is more preferably 40 μm or less, still more preferably 20 μm or less, from the viewpoint of adhesive strength.

As the thickness of the thermal transfer layer, the difference between the thickness of the thermal transfer sheet measured by using a dial thickness gauge (for example, PEACOCK GC-9) and the thickness of the release sheet from which the thermal transfer layer at that location has been removed can be measured.

The average thickness of the thermal transfer layer is an average value obtained by measuring 10 points.

(Laminating Step)

In the method for manufacturing a laminate according to the embodiment of the present invention, the laminate can be produced by laminating a side of the thermal transfer layer of the thermal transfer sheet on at least a part of the surface of the resin member and performing heat bonding.

The heat bonding may be performed simultaneously with the lamination of the thermal transfer sheets, or may be performed after the thermal transfer sheets are laminated.

By performing the surface treatment of the resin member by such a method, sufficient adhesive strength can be imparted to the resin member, and the laminate can be manufactured with high productivity and low cost. The method for manufacturing the laminate may be a method for treating the surface of the resin member (a method for treating the surface of the resin).

The resin contained in the resin member may be a thermoplastic resin or a thermosetting resin.

Examples of the thermoplastic resin include PP (polypropylene), PA (polyamide), PPE (polyphenylene ether), PPS (polyphenylene sulfide), PET (polyethylene terephthalate), PBT (polybutylene terephthalate), POM (polyacetal), PEEK (polyether ether ketone), PC (polycarbonate), PES (polyether sulfide), and EP (epoxy). Among these resins, as the thermoplastic resin that can advantageously exhibit the effects of the present invention, PPS (polyphenylene sulfide), PA (polyamide), PES (polyether sulfide), and EP (epoxy) are exemplified.

As the thermoplastic resin, a fiber-reinforced thermoplastic resin (FRTP) may be adopted.

Examples of the fiber-reinforced thermoplastic resin (FRTP) include a carbon fiber reinforced thermoplastic resin (CFRTP), a glass fiber reinforced thermoplastic resin (GFRTP), and the like.

Examples of the carbon fiber reinforced thermoplastic resin (CFRTP) include a PPS based carbon fiber reinforced thermoplastic resin, a PA based carbon fiber reinforced thermoplastic resin, a PES based carbon fiber reinforced thermoplastic resin, an EP based carbon fiber reinforced thermoplastic resin, a PP based carbon fiber reinforced thermoplastic resin, and the like.

Examples of the glass fiber reinforced thermoplastic resin (GFRTP) include a PPS based glass fiber reinforced thermoplastic resin, a PA based glass fiber reinforced thermoplastic resin, a PP based glass fiber reinforced thermoplastic resin, and the like.

Examples of the thermosetting resin include an unsaturated polyester resin, a vinyl ester resin, an epoxy resin, a melamine resin, a phenol resin, a urethane resin, a polyisocyanate resin, a polyisocyanurate resin, a polyimide resin, and the like.

Examples of the shape of the resin member include, for example, a plate shape having a flat surface, a plate shape having a curved surface, a sheet shape, a film shape, and the like.

The thickness of the resin member is, for example, 0.001 mm to 10 mm.

The resin member may be a prepreg. A prepreg is obtained by impregnating a reinforcing material such as carbon fiber or glass fiber with a thermosetting resin in which an additive such as a curing agent is mixed, and heating or drying the mixture to be in a semicured state.

The "at least a part of the surface of the resin member" means at least a part of all the surfaces of the resin member. For example, in the case where the resin member has a plate shape, a sheet shape, or a film shape, "at least a part of the surface of the resin member" means a part of at least one of the surfaces of the resin member, or the whole surface of at least one of the surfaces of the resin member.

In the case of using a thermoplastic resin as the resin in the resin member, in the manufacture of the laminate, when the melting point of the thermoplastic resin is $T_1$°C, it is preferable that a thermal transfer layer is installed on at least a part of the surface of the thermoplastic resin member, and heat bonding is performed at a temperature of $(T_1 - 50)$°C or higher. The temperature of the heat bonding is preferably $(T_1 - 50)$°C to $(T_1 + 150)$°C, more preferably $(T_1 - 25)$°C to $(T1 + 100)$°C, still more preferably $(T_1 - 10)$°C to $(T_1 + 75)$°C, and particularly preferably $(T_1)$°C to $(T_1 + 50)$°C. By setting the heat bonding temperature, that is, the molding temperature $T\beta$°C, in the above range and performing the surface treatment of the resin member by the method as described above, the interface between the thermal transfer layer and the thermoplastic resin member is melted and mixed to be welded and mixed, and sufficient adhesive strength can be imparted to the thermoplastic resin member. Such imparting can be performed with high productivity and low cost.

In a case where a thermoplastic resin is used as the resin in the resin member, after at least a part of the surface of the thermoplastic resin member is brought into a molten state, a thermal transfer layer is possible to be installed on the surface of the thermoplastic resin member in the molten state. By installing the thermal transfer layer on the surface of the thermoplastic resin member in the molten state, the thermal transfer layer is welded and mixed by the heat of the surface of the thermoplastic resin member, and sufficient adhesive strength can be imparted to the thermoplastic resin member.

In the case where a thermosetting resin is used as the resin in the resin member, in the manufacture of the laminate, when the curing temperature of the thermosetting resin is $T_2$°C, it is preferable that the thermal transfer layer is installed on at least a part of the surface of the thermosetting resin member, and heat bonding is performed at a temperature of $(T_2$-50)°C or higher. The curing temperature is the peak temperature of the exothermic curve measured by DSC. The temperature of the heat bonding is preferably $(T_2 - 50)$°C to $(T_2 + 50)$°C, more preferably $(T_2 - 40)$°C to $(T_2 + 40)$°C, still more preferably $(T_2 - 30)$°C to $(T_2 + 30)$°C, and particularly preferably $(T_2 - 20)$°C to $(T_2 + 20)$°C. By setting the heat bonding temperature, that is, the molding temperature $T\beta$°C in the above range, and performing the surface treatment of the resin member by the method as described above, chemical bonds at the interface between the thermal transfer layer and the thermosetting resin member enable to impart sufficient adhesive strength to the thermosetting resin member. Such imparting can be performed with high productivity and low cost.

In a case where the resin member is a prepreg, it is preferable that a mixed layer in which the prepreg and the thermal transfer layer are mixed is installed between the prepreg and the thermal transfer layer.

In a case where the resin contained in the resin member is a thermosetting resin, after softening at least a part of the surface of the thermosetting resin member by heating, a thermal transfer layer can be installed on the surface of the thermosetting resin member. By installing the thermal transfer layer on the surface of the thermosetting resin member softened by heating, the thermal transfer layer is chemically bonded by the heat of the surface of the thermosetting resin member and sufficient adhesive strength can be imparted to the thermosetting resin member.

The term "chemical bonds" can be made by chemically covalent bonding between the material of the resin member and the thermal transfer layer.

Examples of the method of heat bonding include oven heating, infrared heating, high-frequency heating, and heat pressing, and heat pressing (press molding) is preferred.

The heat bonding time is preferably from 1 second to 10 minutes.

In the laminating step, the resin member may be laminated on a side of the thermal transfer layer of the thermal transfer sheet and then molded by heat pressing.

As the heat pressing, an aspect that in a molding machine (for example, a press machine or the like), a side of the thermal transfer layer of the thermal transfer sheet is laminated on at least a part of the surface of the resin member, and a molding process with heating (for example, integral molding by heat pressing) is performed is exemplified. According to this aspect, since the surface treatment of the resin member and the molding process of the resin member can be performed at the same time, high productivity and low cost can be provided.

Further, by peeling off the release sheet from the laminate, a laminate including the thermal transfer layer on the surface of the laminate is obtained. Peeling of the release sheet is not particularly limited, such as peeling by hand or using a dedicated peeling facility.

After a side of the thermal transfer layer of the thermal transfer sheet which is a laminate of the release sheet and the thermal transfer layer is placed on at least a part of the surface of the resin member and heat-bonded, the release sheet is preferably removed. By removing the release sheet in this manner, the thermal transfer layer is transferred to the surface of the resin member, and a laminate (also referred to as a laminate member of the resin member and the thermal transfer layer) is obtained.

As described above, preferably, a mixed layer in which the resin member and the thermal transfer layer are mixed is installed between the resin member and the thermal transfer layer.

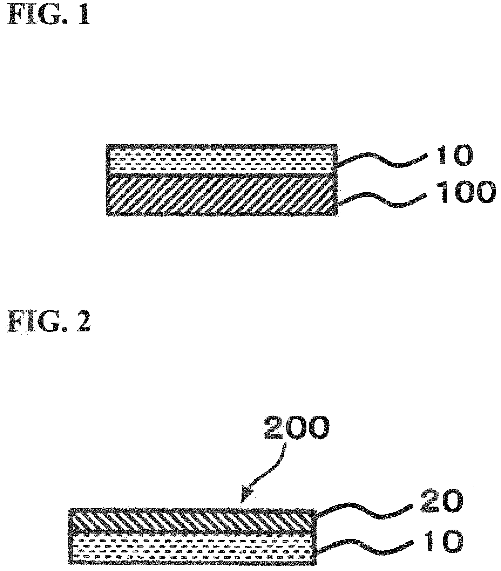

By the above manufacturing method, as shown in Fig. 1, the thermal transfer layer 10 is installed on the surface of the resin member 100, and a laminate is obtained. In Fig. 1, the thermal transfer layer 10 is laminated on the surface of the resin member 100, but a mixed layer (not shown) in which the resin member and the thermal transfer layer are mixed is preferably installed between the resin member 100 and the thermal transfer layer 10.

As shown in Fig. 2, the thermal transfer sheet, which is a laminate of a release sheet and a thermal transfer layer, is a thermal transfer sheet 200, which is a laminate of the release sheet 20 and the thermal transfer layer 10.

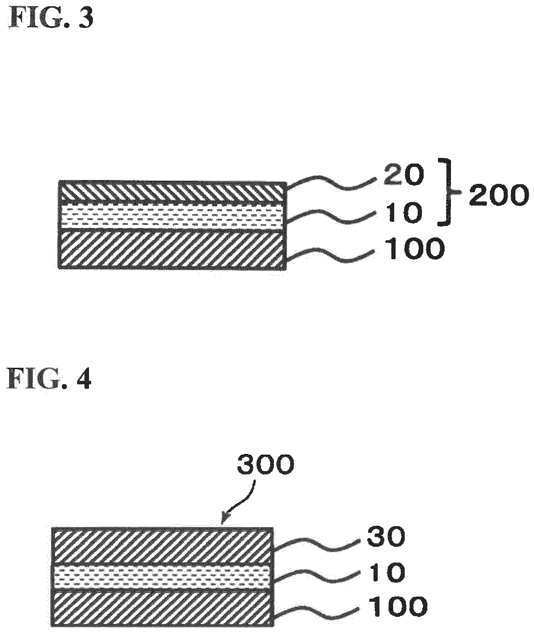

In the method for manufacturing a laminate according to the embodiment of the present invention, form in which a side of the thermal transfer layer of the thermal transfer sheet, which is a laminate of the release sheet and the thermal transfer layer, is placed on at least a part of the surface of the resin member is a form in which the thermal transfer sheet 200 is placed on the surface of the resin member 100 such that a side of the thermal transfer layer 10 of the thermal transfer sheet 200 is on the surface side of the resin member 100 as shown in Fig. 3.

<Method for Manufacturing Coated Article>

A method for producing a coated article according to an embodiment of the present invention includes a coating film forming step of peeling off a release sheet of a laminate obtained by the above-described method for manufacturing a laminate, and forming a coating film on the thermal transfer layer which is exposed.

By the coating film forming step, a coated article having a coating film on at least a part of the surface on a side of the thermal transfer layer of the laminate can be obtained.

As an example of the coated article, in Fig. 4, a coated article 300 including a coating film 30 on the surface of a side of the thermal transfer layer of a laminate in which the thermal transfer layer 10 is installed on the surface of the resin member 100 is shown.

Since the thermal transfer layer is formed not by being coated on the surface of the resin member but using a sheet-shaped thermal transfer sheet, it is possible to prevent the occurrence of unevenness due to the occurrence of cissing or the like. Therefore, the thermal transfer layer can be formed with a uniform thickness on the surface of the resin member, and the coating film can be coated with a uniform thickness. Further, by installing the thermal transfer layer on the surface of the resin member in the molten state, the thermal transfer layer is melted and mixed by the heat of the surface of the resin member, and the adhesive strength between the thermal transfer layer and the resin member is high, thus a coating film having excellent adhesion can be formed. Furthermore, since the thermal transfer layer and the resin member can be integrally molded at the time of forming the coated article, there is no need for a cleaning treatment step or a polishing treatment step using an organic solvent for removing the release agent before the formation of the coating film, as a result, an environmental load and a work load can be reduced with excellent safety.

The coating film is not particularly limited, and examples thereof include coating, a printed layer, a vapor deposition layer, and a plating layer. The material for forming the coating film is not particularly limited, and examples thereof include compositions containing various polymers such as acrylic based, urethane based, epoxy based, fluorine based, polyester melamine based, alkyd melamine based, acrylic melamine based, acrylic urethane based, and acrylic acid curing agents based.

The thickness of the coating film is not particularly limited and is preferably from 0.01 $\mu$m to 2,000 $\mu$m, more preferably from 0.1 $\mu$m to 1,000 $\mu$m, still more preferably from 0.5 $\mu$m to 500 $\mu$m, particularly preferably from 1 $\mu$m to 200 $\mu$m.

The coating method of the coating film is not particularly limited, and general methods such as brush coating, roller coating, spray coating, and various coater coating may be used, and the coating amount of these is not particularly limited. In addition, the time, the temperature, and the like for heating the coating film can also be appropriately determined depending on the coating material, the coating amount, and the like used.

<Method for Manufacturing Bonded Structure>

A method for manufacturing a bonded structure according to an embodiment of the present invention includes a bonding step of peeling off a release sheet from a laminate obtained by a method for manufacturing a laminate and bonding an adherend onto the thermal transfer layer which is exposed through an adhesive layer.

By the bonding step, it is possible to obtain a bonded structure in which an adherend is bonded to at least a part of the surface on a side of the thermal transfer layer of the laminate via an adhesive layer.

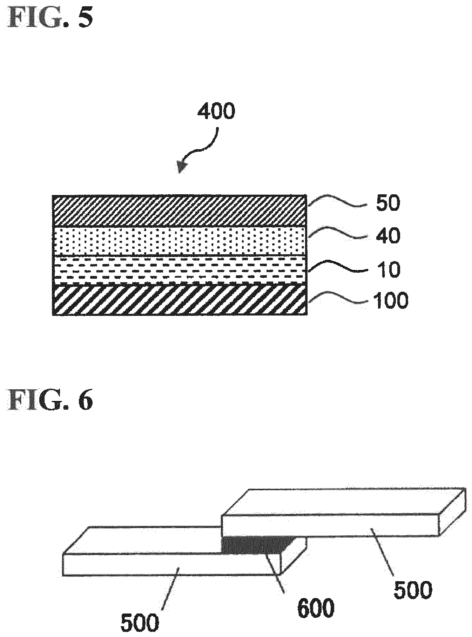

As an example of the bonded structure, in Fig. 5, a bonded structure 500, in which an adherend 50 is bonded to the surface of a side of the thermal transfer layer 10 of the laminate, in which the thermal transfer layer 10 is installed on the surface of the resin member 100, via the adhesive layer 40, is shown.

Since the thermal transfer layer is formed not by being coated on the surface of the resin member but using a sheet-shaped thermal transfer sheet, it is possible to prevent the occurrence of unevenness due to the occurrence of cissing or the like. Therefore, the thermal transfer layer can be formed with a uniform thickness on the surface of the resin member, and the adhesive layer can be coated with a uniform thickness. Further, by installing the thermal transfer layer on the surface of the resin member in the molten state, the thermal transfer layer is melted and mixed by the heat of the surface of the resin member, and the adhesive strength between the thermal transfer layer and the resin member is high, thus the adhesive layer having excellent adhesion can be formed. Further, since the thermal transfer layer and the resin member can be integrally molded at the time of forming the bonded structure, there is no need for a cleaning treatment step or a polishing treatment step using an organic solvent for removing the release agent before the formation of the adhesive layer, as a result, an environmental load and a work load can be reduced with excellent safety.

The adhesive contained in the adhesive layer is not particularly limited, and suitable adhesives such as acrylic-based, silicone-based, epoxy-based, phenol-based, polyurethane-based, cyanoacrylate-based, and polyamide-based can be used.

Examples of the adherend constituting the bonded structure can include a thermosetting resin and a thermoplastic resin used for the resin member described above, a resin-based member made of FRP in which carbon fiber or glass fiber is impregnated with these resins, a metal-based member made of iron, aluminum, titanium, copper, or an alloy mainly made of these, an inorganic member such as glass, tile, and concrete, and a wood-based member such as wood. However, examples of the adherend constituting the bonded structure are not limited to these.

<Thermal Transfer Sheet>

The thermal transfer sheet according to one aspect of the present invention includes a release sheet and a thermal transfer layer, and the release sheet has a thermal expansion coefficient $\alpha$ of $-15\% \leq \alpha \leq +7.5\%$ at T$\alpha$°C represented by the following formula (1).

$$T\alpha°C = \text{melting temperature or decomposition temperature of a release sheet}$$

$$(Tm)°C - 10°C \ (1)$$

In the thermal transfer sheet according to this aspect, since the thermal transfer layer has a sheet shape, the thermal transfer sheet can be integrally molded not by being coated on the surface of the member but being placed and heat-treated. Therefore, it is possible to prevent the occurrence of unevenness due to the occurrence of cissing or the like and form the thermal transfer layer with a uniform thickness on the surface of the member. In addition, when the thermal transfer layer is formed on a part of the surface of the member, it is possible to suppress a decrease in yield due to protrusion or the like.

[Thermal Transfer Layer]

As the thermal transfer layer in the thermal transfer sheet of the present aspect, the description of the thermal transfer layer in the thermal transfer sheet used in the above-described method for manufacturing a laminate may be used as it is.

[Release Sheet]

In the release sheet in the thermal transfer sheet of the present aspect, the thermal expansion coefficient $\alpha$ at T$\alpha$°C represented by the following formula (1) is $-15\% \leq \alpha \leq +7.5\%$.

$$T\alpha°C = \text{melting temperature or decomposition temperature of a release sheet}$$

$$(Tm)°C - 10°C \ (1)$$

From the viewpoint of appearance after molding, the thermal expansion coefficient $\alpha$ of the release sheet at T$\alpha$°C is -15% or more, preferably -13% or more, and more preferably -10% or more. Further, since it is sufficient to have heat resistance to the molding process temperature, the thermal expansion coefficient $\alpha$ of the release sheet at T$\alpha$°C is 7.5% or less, preferably 6% or less, and more preferably 5% or less.

The melting temperature or the decomposition temperature of the release sheet (Tm) can be measured as follows.

That is, as for the thermosetting resin, the storage elastic modulus and the loss elastic modulus are measured, the value of tan $\delta$ (E" (loss elastic modulus)/E' (storage elastic modulus)) is calculated, and the peak temperature of tan $\delta$ on the high temperature side is taken as the melting point (Tm).

The melting point of the thermoplastic resin ($T_1$) can be measured by the same method.

In the case of the amorphous resin, since the amorphous resin does not have a melting point, the decomposition temperature is regarded as the melting point.

The tensile elastic modulus E$\alpha$ of the release sheet at T$\alpha$°C is preferably $1 \times 10^4$ MPa or less, more preferably $4 \times 10^3$ MPa or less, due to the curved surface followability at the time of molding.

By setting the tensile elastic modulus E$\alpha$ of the release sheet at T$\alpha$°C to $1 \times 10^4$ MPa or less, the release sheet is excellent in heat resistance and easily exhibits a curved surface followability, and for example, even in the case of molding using a mold having a curved surface shape or the like, it is easy to follow the shape of the mold. As a result, it is possible to provide a thermal transfer sheet which can prevent occurrence of wrinkles and transfer defects, have excellent appearance, and form a laminate by integral molding with a resin member.

The lower limit of the tensile elastic modulus E$\alpha$ at T$\alpha$°C is not particularly limited, but is preferably 1 MPa or more, and more preferably 10 MPa or more, in order to obtain a thermal transfer sheet that can easily exhibit curved surface followability and can also be applied to a member having a complicated three-dimensional curved surface shape.

The tensile elastic modulus refers to a tensile elastic modulus measured by the following method using a single-layer resin film formed of a resin material constituting the measurement target portion as a measurement sample. Specifically, a test piece was prepared by cutting the release sheet into a strip shape having a width of 5 mm with the flow direction (MD direction) at the time of film formation as a longitudinal direction. The distance between chucks was set to 10 mm, and the temperature was dispersed at 25°C to 600°C in a tensile viscoelasticity measurement device RSAIII manufactured by TA Instruments. At this time, the temperature increase rate was set to 5°C/min, and the frequency was set to 1 Hz. At this time, the storage elastic modulus at $T\alpha$°C was taken as the tensile elastic modulus $E\alpha$.

The tensile elastic modulus can be adjusted by a configuration of the release sheet, the material used, a combination thereof, or the like.

Examples of the release sheet usable for the thermal transfer sheet include polyester-based sheets such as polyethylene terephthalate, polyethylene naphthalate, and polybutylene terephthalate, polyamide-based sheets such as polyamide 6, polyamide 66, and aromatic polyamide, and polyimide-based sheets such as aromatic polyimide. The method of molding the release sheet is not particularly limited, but the release sheet may be formed by a melt extrusion method, a melt rolling method, a solution casting method, or the like, and may be further uniaxially stretched or biaxially stretched.

The thickness of the release sheet is preferably 5 $\mu$m or more, more preferably 10 $\mu$m or more, still more preferably 20 $\mu$m or more, and still more preferably 30 $\mu$m or more, from the viewpoint of handleability and processability. In addition, the thickness of the release sheet is preferably 300 $\mu$m or less, more preferably 200 $\mu$m or less, and still more preferably 100 $\mu$m or less in order to provide a thermal transfer sheet which can easily exhibit curved surface followability and can also be applied to a member having a complicated three-dimensional curved surface shape.

As necessary, a release treatment with an appropriate release treatment agent such as silicone may be performed on the surface of the side of the thermal transfer layer of the release sheet or on both surfaces of the release sheet.

The thermal transfer sheet according to another aspect includes a release sheet and a thermal transfer layer, and the release sheet has a thermal expansion coefficient $\beta$ of $-15\% \leq \beta \leq +7.5\%$ at a molding temperature $T\beta$°C, which is a temperature at the time of laminating of the thermal transfer sheet on the resin member by heat bonding.

[Manufacture of Thermal Transfer Sheet]

The thermal transfer sheet can be manufactured by any appropriate method. Examples thereof include a method of dipping the release sheet into a solution (a composition for forming a thermal transfer layer) containing a material of the thermal transfer layer and a solvent and then drying the release sheet which was dipped into the solution as necessary, a method of brush coating of a solution containing the material of the thermal transfer layer and the solvent to the surface of the release sheet and then drying the release sheet to which the solution was brush coated as necessary, a method of coating of a solution containing the material of the thermal transfer layer and the solvent to the surface of the release sheet by various coaters and then drying the release sheet to which the solution was coated as necessary, and a method of spray coating of the solution containing the material of the thermal transfer layer and the solvent to the surface of the release sheet and then drying the release sheet to which the solution was spray coated as necessary.

Examples of the composition for forming the thermal transfer layer include a solution in which the material of the thermal transfer layer is dissolved in a solvent.

Examples of the solvent include water, alcohols such as methanol, ethanol, and isopropyl alcohol; and the like; ketones such as methyl ethyl ketone; ester; aliphatic, alicyclic, and aromatic hydrocarbons; halogenated hydrocarbons; amides such as dimethylformamide; sulfoxides such as dimethyl sulfoxide; ethers such as dimethyl ether and tetrahydrofuran; ethanol or a mixed solvent of ethanol and water is preferred in order to suppress generation of gelatinized materials. These solvents may be used alone or in combination of two or more of these.

The solid content concentration in the composition for forming the thermal transfer layer may be appropriately set depending on the purpose. From the viewpoint of the thickness accuracy of the thermal transfer layer, the mass ratio is preferably from 0.01 mass% to 20 mass%, more preferably from 0.05 mass% to 10 mass%, still more preferably from 0.1 mass% to 5 mass%.

The composition for forming the thermal transfer layer may contain various additives such as a pH adjusting agent, a crosslinking agent, a viscosity adjusting agent (such as a thickener), a leveling agent, a peeling adjusting agent, a plasticizer, a softening agent, a filler, a coloring agent (such as a pigment or a dye), a surfactant, an antistatic agent, a preservative, an antiaging agent, an ultraviolet absorber, an antioxidant, and a light stabilizer, as necessary.

For example, by adding a coloring agent, the thermal transfer layer is visualized, and it is easy to determine whether or not the surface of the resin member has already been modified, and there is an advantage in terms of the process management.

Examples of the coloring agent include a dye and a pigment. A fluorescent material that can be visually recognized by a black light may be used.

[Laminate]

A laminate according to an embodiment of the present invention includes the thermal transfer sheet and a resin member laminated on a side of the thermal transfer layer of the thermal transfer sheet. The laminate preferably includes a mixed layer in which a resin and a thermal transfer layer are mixed between the resin member and the thermal transfer layer.

As the thermal transfer sheet, the thermal transfer layer, and the resin member, the above description may be used as it is.

The mixed layer is a layer in which a resin and a thermal transfer layer are mixed. For example, by installing a thermal transfer layer on at least a part of the surface of the resin member and performing heat welding or heat bonding, the interface between the thermal transfer layer and the resin member is melt-contacted and weld-mixed, thereby obtaining a layer of the weld-mixed portion as the mixed layer. The formation of the mixed layer improves the adhesive strength between the resin member and the thermal transfer layer. In the mixed layer, the resin and the thermal transfer layer are preferably bonded by a chemical reaction such as covalent bonding. By the chemical reaction such as covalent bonding, the interface between the resin member and the thermal transfer layer disappears, the resin member and the thermal transfer layer are integrated, and a more excellent adhesive strength is obtained.

The thickness of the mixed layer can be appropriately determined according to the conditions of the heat welding and the type of the resin or the thermal transfer layer contained in the resin member. The thickness of the mixed layer is preferably 1.5 nm or more, more preferably 2.0 nm or more.

In the laminate according to the embodiment of the present invention, the thickness of the thermal transfer layer is preferably 0.001 $\mu$m to 20 $\mu$m, more preferably 0.01 $\mu$m to 15 $\mu$m, still more preferably 0.5 $\mu$m to 10 $\mu$m, particularly preferably 0.7 $\mu$m to 10 $\mu$m.

[Examples]

Hereinafter, the present invention will be specifically described with reference to Examples, but the present invention is not limited to these Examples.

[Example 1]

(Thermal Transfer Sheet)

(Fine Resin FR-105 (methoxymethylated polyamide resin) manufactured by Namariichi Co., Ltd./ARUFON (registered trademark) UC-3000 (carboxyl group-containing acrylic oligomer) manufactured by Toagosei Co., Ltd. (mass ratio: 100/2 mixture)) was dissolved in a mixed solvent of ethanol (EtOH)/water/isopropanol (IPA) = 60 mass%/10 mass%/30 mass% at 60°C to prepare a 20 mass% solution (a composition for forming a thermal transfer layer).

The prepared composition for forming a thermal transfer layer was filtered through a nylon mesh having an opening of 188 $\mu$m, then coated on a release sheet (MRF (thickness: 25 $\mu$m, dimensions: width 250 mm $\times$ length 450 mm) manufactured by Mitsubishi Chemical Corporation) with a bar coater, air-dried, and further dried at 100°C for 1 minute in a constant temperature dryer to prepare a thermal transfer sheet having a thermal transfer layer on the release sheet.

<Glass Transition Temperature (Tg)>

The storage elastic modulus and the loss elastic modulus of the release sheet were measured, the value of tan $\delta$ (E'' (loss elastic modulus)/E' (storage elastic modulus)) was calculated, and the peak temperature of tan $\delta$ on the low temperature side was taken as the glass transition temperature (Tg).

<Melting Point (Tm)>

The storage elastic modulus and the loss elastic modulus of the release sheet were measured, the value of tan $\delta$ (E'' (loss elastic modulus)/E' (storage elastic modulus)) was calculated, and the peak temperature of tan $\delta$ on the high temperature side was taken as the melting point (Tm).

The melting point of the thermoplastic resin (T1) was measured by the same method.

In the case of the amorphous resin, since the amorphous resin does not have the melting point, the decomposition temperature was regarded as the melting point.

(Measurement of Storage Elastic Modulus and Loss Elastic Modulus)

The release sheet was cut into strips having a length of 10 mm (measurement length) $\times$ a width of 5 mm with a cutter knife, and the storage elastic modulus/loss elastic modulus at 25°C to 600°C was measured using a solid viscoelasticity measurement device (RSAIII, manufactured by TA Instruments Co., Ltd.). The measurement conditions were set to a frequency of 1 Hz and a temperature increase rate of 5°C/min.

<Thermal Expansion Coefficient>

The release sheet was cut into strips having a width of about 4 mm, and the thermal expansion coefficient $\beta$ at the molding temperature $T\beta°C$ of the release sheet and the thermal expansion coefficient $\alpha$ at $T\alpha°C$ were measured by TMA (thermomechanical analysis) measurement.

$$T\alpha°C = \text{melting temperature or decomposition temperature of the release sheet}$$
$$(Tm)°C - 10°C \quad (1)$$

· Apparatus: TMA Q-400 manufactured by TA Instruments
· Measurement mode: Tension
· Span: 16 mm
· Measurement load: 19.6 mN
· Atmospheric gas: $N_2$ (50 ml/min)
· Temperature condition: from 20°C to 600°C ($\pm$ 10°C/min)

<Tensile Elastic Modulus>

The storage elastic modulus and the loss elastic modulus at the molding temperature $T\beta°C$ of the release sheet were measured, and the measured storage elastic modulus was taken as the tensile elastic modulus $E\beta$ at the molding temperature $T\beta°C$.

The storage elastic modulus and the loss elastic modulus at $T\alpha°C$ of the release sheet were measured, and the measured storage elastic modulus was taken as the tensile elastic modulus $E\alpha$ at $T\alpha°C$.

$$T\alpha°C = \text{melting temperature or decomposition temperature of the release sheet}$$
$$(Tm)°C - 10°C \quad (1)$$

The "elastic modulus" in the table represents the "tensile elastic modulus".

<Thickness of Thermal Transfer Layer>

The thickness of the thermal transfer layer was measured by a dial gauge (GC-9 manufactured by Peacock). The thickness of the thermal transfer sheet was measured, the thickness of the release sheet from which the thermal transfer layer was removed at that point was measured, and the difference was taken as the thickness of the thermal transfer layer. The average thickness is an average value obtained by measuring 10 points. The unit of the thickness in the table is $\mu$m.

(Laminate (1))

A side of the thermal transfer layer of the thermal transfer sheet prepared as described above was superimposed on a unidirectional long fiber carbon fiber reinforced thermoplastic epoxy resin (C-EpTP) (width 200 mm $\times$ length 200 mm $\times$ thickness 2 mm) as a resin member, and pressed at a molding temperature $T\beta°C$ shown in Table 1 to prepare a flat plate-shaped laminate (1).

(Bonded Structure)

After each release sheet of two laminates (1) (laminates 500) prepared as described above was peeled off, the laminates (1) (laminates 500) were bonded in the form of Fig. 6 using an adhesive sheet 600 such that a side of the thermal transfer layers were bonded to each other, thereby obtaining a bonded structure. As the adhesive sheet, a rubber-modified epoxy adhesive sheet described in JP-A-2012-197427 was used for adhesion. The adhesive area was set to 25 mm × 10 mm. The curing conditions of the adhesive were set to 150°C × 20 minutes.

<Evaluation of Shear Adhesive Strength>

The tensile shear adhesive strength between the two laminate bodies in the bonded structure was measured by a tensile tester (manufactured by Minebea Co., Ltd.; model number: TG-100kN). The measurement was carried out at 25 °C at a tensile rate of 5 mm/min. The obtained measurement value was converted per unit area to obtain a shear adhesive strength.

(Coated Article)

After the release sheet of the laminate (1) prepared as described above was peeled off, a "body pen" acrylic coating material (for automobile) manufactured by SOFT99 Corporation was coated to the thermal transfer layer by spraying, and the thermal transfer layer was dried at room temperature overnight to prepare a coated article having a coating film having a film thickness of 50 $\mu$m.

<Evaluation of Coating Adhesion>

The coated article was cut into strips having a width of about 4 mm, subjected to cross-cut evaluation by a cross-cut method described in JIS K5600-5-6, and evaluated as coating adhesion.

- Cut interval: 2 mm
- Number of cross-cuts: 100 mass
- Release tape: (Nichiban) Cellophane tape 24 mm width

(Laminate (2))

In order to evaluate the appearance defect due to the wrinkles caused by the release sheet, the laminate (2) was formed with a tablet casing mold.
Specifically, a side of the thermal transfer layer of the thermal transfer sheet prepared as described above was superimposed on a unidirectional long fiber carbon fiber reinforced thermoplastic epoxy resin (C-EpTP) (width 200 mm × length 270 mm × thickness 1 mm) as a resin member, and was press molded at a molding temperature T$\beta$°C shown in Table 1 to prepare a laminate (2).
The tablet casing mold had a width of 170 mm and a length of 240 mm, and the corner of the casing had a curvature radius in the height direction of R = 7 mm, a curvature radius in the plane direction of R = 12 mm, and an aperture depth of 9 mm.

<Appearance Evaluation>

The appearance of the laminate (2) in a planar shape and a curved surface shape was visually observed and evaluated according to the following criteria.
As for the appearance in the planar shape, a case where wrinkles caused by the release sheet were formed on a flat portion of the laminate (2) was evaluated as "B", and a case where the laminate could be formed without any wrinkles was evaluated as "A".
In addition, as for the appearance in the curved surface shape, a case where wrinkles caused by the release sheet were formed at the corner portion of the laminate (2) was evaluated as "B", a case where the laminate could be formed without any wrinkles were evaluated as "A", and a case where the release sheet was torn although no wrinkle occurred was evaluated as "C".
In addition, as for the pinholes, it was determined that a case where even one void-like appearance defect was confirmed was evaluated as "B", and a case where no void-like appearance defect was formed was determined as "A".

[Examples 2 to 18 and Comparative Examples 3 to 6]

A thermal transfer sheet, a laminate (1), a bonded structure, a coated article, and a laminate (2) were prepared in the same manner as in Example 1 except that the thermal transfer layer, the release sheet, the resin member, and the molding temperature T$\beta$°C were changed as shown in Tables 1 to 3, and each measurement and each evaluation were performed in the same manner as in Example 1.

<Curing Temperature ($T_2$) of Thermosetting Resin>

5 mg of the thermoset resin before curing was cut out, and DSC (differential operation calorimetry) measurement was performed.

- Apparatus: high-sensitivity DSC Q2000 manufactured by TA Instruments
- Atmospheric gas: N2 (50 ml/min)
- Temperature rising rate: 2°C/min
- Temperature condition: from -30°C to 300°C

The peak temperature of the exothermic curve associated with the curing at the time of measurement under the above conditions was taken as the curing temperature ($T_2$).

[Comparative Examples 1 and 2]

In Comparative Examples 1 and 2, the thermal transfer layer of the thermal transfer sheet was not installed, and press working was performed while the release sheet was superimposed on the resin member. Thereafter, the release sheet was removed, and a bonded structure was prepared in the same manner as in Example 1 using a resin member which has no thermal transfer layer after press working, and the shear adhesion strength was evaluated.

Further, a coated article having a coating film having a film thickness of 50 $\mu$m was prepared by coating a "body pen" acrylic coating material (for automobile) manufactured by SOFT99 Corporation to a resin member which has no thermal transfer layer after press working with a spray directly, and the coating adhesion was evaluated.

In addition, without installing the thermal transfer layer of the thermal transfer sheet, the release sheet was superimposed on the resin member, and molded with a tablet casing mold to evaluate the appearance.

The evaluation results of Examples 1 to 18 and Comparative Examples 1 to 6 are shown in Tables 1 to 3 below.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|---|
| Thermal Transfer Layer | Polymer | FR-105 (Methoxymethylated PA) | 100 | 100 | 100 | 100 | 100 | 100 | 100 | 100 | 100 |
| | | UC-3000 (Acrylic Oligomer) | 2 | 2 | 2 | 2 | 2 | 2 | 2 | 2 | 2 |
| | Solid Content | | 20% | 20% | 20% | 20% | 20% | 20% | 20% | 20% | 20% |
| | Solvent | EtOH/Water/IPA | 60/10/30 | 60/10/30 | 60/10/30 | 60/10/30 | 60/10/30 | 60/10/30 | 60/10/30 | 60/10/30 | 60/10/30 |
| | Thickness | | 5 | 5 | 5 | 5 | 5 | 5 | 5 | 5 | 5 |

EP 3 950 375 A1

16

| | | | Example 1 | Example 2 | Example 3 | Example 4 | Example 5 | Example 6 | Example 7 | Example 8 | Example 9 |
|---|---|---|---|---|---|---|---|---|---|---|---|
| Release Sheet | Type | | Biaxially Stretched PET | Biaxially Stretched PET | Unstretched PET | Annealing PEN | Biaxially Stretched PEN | Easy-molding PET | Easy-molding PET | Biaxially Stretched PA | PI |
| | Product Number | | (Mitsubishi) MRF | (Mitsubishi) MRF | (Toray) Lumirror 50-UH-1 | (Teijin Film Solutions) Teonex Q83 | (Teijin Film Solutions) Teonex Q51 | (Toray) QV22 | (Mitsubishi Chemical) G931E75 | (Idemitsu) UNILON G-100 | (Ube Industries) UPILEX-S |
| | Thickness | | 25 | 50 | 50 | 50 | 50 | 75 | 75 | 50 | 50 |
| | Tg (tan$\delta$) | | 117 | 117 | 112 | 155 | 152 | 98 | 98 | 93 | 334 |
| | Tm (tan$\delta$) | | 233 | 233 | 241 | 260 | 260 | 224 | 216 | 209 | 577 |
| | T$\alpha$°C=Tm-10°C | | 223 | 223 | 231 | 250 | 250 | 214 | 206 | 199 | 567 |
| | Thermal Expansion Coefficient (@T$\alpha$°C) | | -13.6% | -12.8% | -5.0% | -9.8% | -12.5% | -5.0% | -14.2% | 4.8% | 0.5% |
| | Elastic Modulus (@T$\alpha$°C) | | 136MPa | 122MPa | 121MPa | 111MPa | 108MPa | 40MPa | 42MPa | 165MPa | 1085MPa |
| | Molding Temperature (T$\beta$°C) | | 200°C | 200°C | 200°C | 200°C | 200°C | 200°C | 200°C | 200°C | 350°C |
| | Thermal Expansion Coefficient (@T$\beta$°C) | | -7.1% | -5.9% | 1.4% | 0.2% | -0.5% | -0.9% | -13.1% | 4.9% | 0.1% |
| | Elastic Modulus (@T$\beta$°C) | | 267MPa | 212MPa | 196MPa | 341MPa | 306MPa | 57MPa | 50MPa | 165MPa | 1670MPa |

| | | | Example 1 | Example 2 | Example 3 | Example 4 | Example 5 | Example 6 | Example 7 | Example 8 | Example 9 |
|---|---|---|---|---|---|---|---|---|---|---|---|
| Manufacturing Method | Resin Member | | C-EpTP | C-EpTP | C-EpTP | C-EpTP | C-EpTP | C-EpTP | C-EpTP | C-EpTP | C-PES |
| | Molding Method | | Press Molding | Press Molding | Press Molding | Press Molding | Press Molding | Press Moldinp | Press Molding | Press Molding | Press Molding |
| | Molding Temperature (Tβ°C) | | 200°C | 200°C | 200°C | 200°C | 200°C | 200°C | 200°C | 200°C | 350°C |
| Appearance | Planar Shape (Wrinkle) | | A | A | A | A | A | A | A | A | A |
| | Curved Surface Shape (Wrinkle, Tear) | | A | A | A | A | A | A | A | A | A |
| | Pinhole | | A | A | A | A | A | A | A | A | A |
| Adhesiveness | Shear Adhesive Strength | | 25.2MPa | 25.6Pa | 24.8MPa | 24.3MPa | 23.7MPa | 25.1MPa | 23.5MPa | 24.8MPa | 23.2MPa |
| | | Peeling Mode | Cohesive Failure | Cohesive Failure | Cohesive Failure | Cohesive Failure | Cohesive Failure | Cohesive Failure | Cohesive Failure | Cohesive Failure | Cohesive Failure |
| | Coating Adhesion | Number of Peeling Points (per 100) | 0 | 0 | 0 | 0 | 0 | 0 | 0 | 0 | 0 |

[Table 2]

| | | | Example 10 | Example 11 | Example 12 | Example 13 | Example 14 | Example 15 | Example 16 | Example 17 | Example 18 |
|---|---|---|---|---|---|---|---|---|---|---|---|
| Thermal Transfer Layer | Polymer | FR-105 (Methoxymethylated PA) | 100 | 100 | 100 | 100 | 100 | 100 | 100 | 100 | 100 |
| | | UC-3000 (Acrylic Oligomer) | 2 | 2 | 2 | 2 | 2 | 2 | 2 | 2 | 2 |
| | Solid Content | | 20% | 20% | 20% | 20% | 20% | 20% | 20% | 20% | 20% |
| | Solvent | EtOH/Water/IPA | 60/10/30 | 60/10/30 | 60/10/30 | 60/10/30 | 60/10/30 | 60/10/30 | 60/10/30 | 60/10/30 | 60/10/30 |
| | Thickness | | 1 | 20 | 40 | 10 | 20 | 40 | 10 | 10 | 10 |

(continued)

| | | Example 10 | Example 11 | Example 12 | Example 13 | Example 14 | Example 15 | Example 16 | Example 17 | Example 18 |
|---|---|---|---|---|---|---|---|---|---|---|
| Release Sheet | Type | Biaxially Stretched PET | Biaxially Stretched PET | Biaxially Stretched PET | Biaxially Stretched PET | Biaxially Stretched PET | Biaxially Stretched PET | Biaxially Stretched PA | Unstretched PA | PTFE |
| | Product Number | (Mitsubishi) MRF | (Mitsubishi) MRF | (Mitsubishi) MRF | (Mitsubishi) MRF | (Mitsubishi) MRF | (Mitsubishi) MRF | (Idemitsu) UNILON G-100 | (Toray) TORAYFAN 1401 | (Nitto) NITOFLON NO.900UL |
| | Thickness | 50 | 50 | 50 | 50 | 50 | 50 | 50 | 50 | 50 |
| | Tg (tanδ) | 117 | 117 | 117 | 117 | 117 | 117 | 93 | 71 | 123 |
| | Tm (tanδ) | 233 | 233 | 233 | 233 | 233 | 233 | 209 | 210 | 321 |
| | Tα°C=Tm-10°C | 223 | 223 | 223 | 223 | 223 | 223 | 199 | 200 | 311 |
| | Thermal Expansion Coefficient (@Tα°C) | -12.8% | -12.8% | -12.8% | -12.8% | -12.8% | -12.8% | 4.8% | 7.8% | 24.0% |
| | Elastic Modulus (@Tα°C) | 122MPa | 122MPa | 122MPa | 122MPa | 122MPa | 122MPa | 165MPa | 118MPa | 24MPa |
| | Molding Temperature (Tβ°C) | 200°C | 200°C | 200°C | 150°C | 150°C | 150°C | 150°C | 150°C | 150°C |
| | Thermal Expansion Coefficient (@Tβ°C) | -5.9% | -5.9% | -5.9% | -0.5% | -0.5% | -0.5% | -1.5% | 1.1% | 4.9% |
| | Elastic Modulus (@Tβ°C) | 212MPa | 212MPa | 212MPa | 267MPa | 267MPa | 267MPa | 390MPa | 235MPa | 73MPa |

| | | | Example 10 | Example 11 | Example 12 | Example 13 | Example 14 | Example 15 | Example 16 | Example 17 | Example 18 |
|---|---|---|---|---|---|---|---|---|---|---|---|
| Manufacturing Method | Resin Member | | C-EpTP | C-EpTP | C-EpTP | C-EpTS | C-EpTS | C-EpTS | C-EpTS | C-EpTS | C-EpTS |
| | Molding Method | | Press Molding | Press Molding | Press Molding | Press Molding | Press Molding | Press Molding | Press Molding | Press Molding | Press Molding |
| | Molding Temperature (Tβ°C) | | 200°C | 200°C | 200°C | 150°C | 150°C | 150°C | 150°C | 150°C | 150°C |
| Appearance | Planar Shape (Wrinkle) | | A | A | A | A | A | A | A | A | A |
| | Curved Surface Shape (Wrinkle, Tear) | | A | A | A | C (Tear) | C (Tear) | C (Tear) | C (Tear) | A | A |
| | Pinhole | | A | A | A | A | A | A | A | A | A |
| Adhesiveness | Shear Adhesive Strength | | 26.5MPa | 25.0MPa | 23.9MPa | 18.7MPa | 18.9MPa | 18.8MPa | 18.5MPa | 18.2MPa | 17.8MPa |
| | | Peeling Mode | Cohesive Failure | Cohesive Failure | Cohesive Failure | Cohesive Failure | Cohesive Failure | Cohesive Failure | Cohesive Failure | Cohesive Failure | Cohesive Failure |
| | Coating Adhesion | Number of Peeling Points (per 100) | 0 | 0 | 0 | 0 | 0 | 0 | 0 | 0 | 0 |

[Table 3]

| | | | Comparative Example 1 | Comparative Example 2 | Comparative Example 3 | Comparative Example 4 | Comparative Example 5 | Comparative Example 6 |
|---|---|---|---|---|---|---|---|---|
| Thermal Transfer Layer | Polymer | FR-105 (Methoxymethylated PA) | None | None | 100 | 100 | 100 | 100 |
| | | UC-3000 (Acrylic Oligomer) | None | None | 2 | 2 | 2 | 2 |
| | Solid Content | | - | - | 20% | 20% | 20% | 20% |
| | Solvent | EtOH/Water/IPA | - | - | 60/10/30 | 60/10/30 | 60/10/30 | 60/10/30 |
| | Thickness | | - | - | 10 | 10 | 10 | 10 |
| Release Sheet | Type | | PI | Biaxially Stretched PET | PMP | Unstretched PA | PTFE | Shrink PO |
| | Product Number | | (Ube Industries) UPILEX-S | (Mitsubishi) MRF | (Mitsui Chemicals) TPX 88BM T4 | (Toray) TORAYFAN 1401 | (Nitto) NITOFLON NO.900UL | (TAIYO ELECTRIC IND) HS-2520 |
| | Thickness | | 50 | 50 | 50 | 50 | 50 | 12 |
| | Tg (tanδ) | | 334 | 117 | 45 | 71 | 123 | - |
| | Tm (tanδ) | | 577 | 233 | 212 | 210 | 321 | 126 |
| | Tα°C=Tm-10°C | | 567 | 223 | 202 | 200 | 311 | 116 |
| | Thermal Expansion Coefficient (@Tα°C) | | 0.5% | -12.8% | 20.0% | 7.8% | 24.0% | -32.0% |
| | Elastic Modulus (@Tα°C) | | 1085MPa | 122MPa | 2MPa | 118MPa | 24MPa | 58MPa |
| | Molding Temperature (Tβ°C) | | 350°C | 150°C | 200°C | 200°C | 200°C | 110°C |
| | Thermal Expansion Coefficient (@Tβ°C) | | 0.1% | -0.5% | 20.0% | 7.8% | 7.7% | -26.4% |
| | Elastic Modulus (@Tβ°C) | | 1670MPa | 267MPa | 1.6MPa | 118MPa | 63MPa | 61MPa |

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| Manufacturing Method | Resin Member | | C-PES | C-EpTS | C-EpTP | C-EpTP | C-EpTP | C-EpTS |
| | Molding Method | | Press Molding | Press Molding | Press Molding | Press Molding | Press Molding | Press Molding |
| | Molding Temperature (Tβ°C) | | 350°C | 150°C | 200°C | 200°C | 200°C | 110°C |
| Appearance | Planar Shape (Wrinkle) | | A | A | B (Wrinkle) | B (Wrinkle) | B (Wrinkle) | Forming Defect |
| | Curved Surface Shape (Wrinkle, Tear) | | A | C (Tear) | A | A | A | |
| | Pinhole | | B | A | A | A | A | |
| Adhesiveness | Shear Adhesive Strength | | 5.9Mpa | 4.9MPa | 22.8MPa | 23.2MPa | 25.1MPa | - |
| | | Peeling Mode | Interface Failure | Interface Failure | Cohesive Failure | Cohesive Failure | Cohesive Failure | - |
| | Coating Adhesion | Number of Peeling Points (per 100) | 98 | 100 | 5 | 0 | 0 | - |

The release sheets described in the tables are as follows.

MRF: polyester resin sheet manufactured by Mitsubishi Chemical Co., Ltd. (biaxially stretched polyethylene terephthalate (PET)/silicone treatment)

Lumirror 50-UH-1 (registered trademark): manufactured by Toray Co., Ltd. (unstretched polyethylene terephthalate (PET) film)

Teonex Q83 (registered trademark): manufactured by Teijin Film Solutions Co., Ltd. (biaxially stretched polyethylene naphthalate (PEN) film)

Teonex Q51 (registered trademark): manufactured by Teijin Film Solutions Co., Ltd. (biaxially stretched polyethylene naphthalate (PEN) film)

QV 22: manufactured by Toray Co., Ltd. (polyethylene terephthalate (PET) film)

G931E75: manufactured by Mitsubishi Chemical Co., Ltd. (polyethylene terephthalate (PET) film)

UPILEX-S (registered trademark): manufactured by Ube Industries, Ltd. (polyimide film)

NIFTOLON NO.900UL: fluororesin sheet film manufactured by Nitto Denko Corporation (polytetrafluoroethylene (PTFE))

UNILON G-100: manufactured by Idemitsu Co., Ltd. (biaxially stretched polyamide (PA))

TORAYFAN 1401: manufactured by Toray Co., Ltd. (unstretched polyamide (PA))

TPX 88BMT4: manufactured by Mitsui Chemicals Co., Ltd. (polymethyl pentene (PMP))

Heat-Shrink Film HS-2520: manufactured by TAIYO ELECTRIC INDUSTRY Co., Ltd. (polyolefin-based shrink film)

With respect to the MFR, a thermal transfer layer was applied to the silicone-treated surface.

With respect to the NIFTOLON No. 900UL, TPX 88BMT4, and HS-2520, the heat transfer layer was applied in an untreated state.

The other release sheets were subjected to a silicone treatment on one surface, and a thermal transfer layer was applied to the silicone-treated surface.

The resin members shown in the tables are as follows.

C-EpTP: unidirectional long fiber carbon fiber reinforced thermoplastic epoxy resin
C-PES: Twill carbon fiber reinforced polyether sulfide
C-EpTS: Twill carbon fiber reinforced thermosetting epoxy resin

In Examples 1 to 18, since the thermal expansion coefficient of the release sheet was within the specified range of the present invention, the appearance of the laminate was good, so that the thermal transfer layer was firmly adhered to the resin member and a uniform and smooth thermal transfer layer could be formed. Therefore, a coated article having good coating adhesion and a bonded structure having good adhesiveness could be obtained.

On the other hand, in Comparative Examples 1 and 2, although the thermal expansion coefficient of the release sheet was within the specified range of the present invention, since there is no thermal transfer layer, good coating adhesion and adhesiveness could not be obtained.

In Comparative Examples 3 to 5, since the thermal expansion coefficient of the release sheet was larger than the specified range of the present invention, the release sheet was swelled immediately after being set in the heated mold, appearance defects such as wrinkles occurred after molding.

In Comparative Example 6, the thermal expansion coefficient of the release sheet was smaller than the specified range of the present invention, the release sheet was shrunk immediately after being set in the heated mold, and molding could not be performed properly.

Although preferred embodiments of the present invention have been described above, the present invention is not limited to the above embodiments, and various modifications and substitutions can be added to the above embodiments without departing from the scope of the present invention.

The present application is based on a Japan Patent Application (Japanese Patent Application No. 2019-068826) filed on March 29, 2019 and a Japanese Patent Application (Japanese Patent Application No. 2019-193739) filed on October 24, 2019, and the contents thereof are incorporated herein by reference.

REFERENCE SIGNS LIST

10   Thermal transfer layer
20   Release sheet
30   Coating film

40      Adhesive layer
50      Adherend
100     Resin member
200     Thermal transfer sheet
300     Coated article
400     Bonded structure
500     Laminate
600     Adhesive sheet

**Claims**

1.  A method for manufacturing a laminate, comprising:

    a laminating step of laminating a side of a thermal transfer layer of a thermal transfer sheet having a release sheet and the thermal transfer layer on at least a part of a surface of a resin member by heat bonding, wherein the release sheet has a thermal expansion coefficient $\beta$ of - 15% $\leq \beta \leq$ +7.5% at a molding temperature T$\beta$°C in the laminating step.

2.  The method for manufacturing a laminate according to claim 1, wherein
    the release sheet has a tensile elastic modulus E$\beta$ of $1 \times 10^4$ MPa or less at the molding temperature T$\beta$°C.

3.  The method for manufacturing a laminate according to claim 1 or 2, wherein
    the thermal transfer layer has an average thickness of 0.1 $\mu$m to 50 $\mu$m.

4.  The method for manufacturing a laminate according to any one of claims 1 to 3, wherein
    in the laminating step, the heat bonding is performed by heat pressing.

5.  A method for manufacturing a coated article, comprising:
    a coating film forming step of peeling off the release sheet from the laminate obtained by the method for manufacturing a laminate according to any one of claims 1 to 4 and forming a coating film on the thermal transfer layer which is exposed.

6.  A method for manufacturing a bonded structure, comprising:
    a bonding step of peeling off the release sheet from the laminate obtained by the method for manufacturing a laminate according to any one of claims 1 to 4 and bonding an adherend onto the thermal transfer layer which is exposed via an adhesive layer.

7.  A thermal transfer sheet, comprising:

    a release sheet and a thermal transfer layer, wherein
    the release sheet has a thermal expansion coefficient $\alpha$ of -15% $\leq \alpha \leq$ +7.5% at T$\alpha$°C represented by the following formula (1):

    $$T\alpha°C = \text{melting temperature or decomposition temperature of a release sheet}$$
    $$(Tm)°C - 10°C \ (1).$$

8.  The thermal transfer sheet according to claim 7, wherein
    the release sheet has a tensile elastic modulus E$\alpha$ of $1 \times 10^4$ MPa or less at the T$\alpha$°C.

9.  The thermal transfer sheet according to claim 7 or 8, wherein
    the thermal transfer layer has an average thickness of 0.1 $\mu$m to 50 $\mu$m.

10. The thermal transfer sheet according to any one of claims 7 to 9, wherein
    the thermal transfer layer contains a polymer component, and the polymer component contains at least one type of a polymer having a non-polar unit and a polar unit having a polar group and a polymer obtained by modifying a part of a polymer composed of a non-polar unit with a polar unit having a polar group.

**11.** The thermal transfer sheet according to claim 10, wherein
the polymer component contains at least one type selected from the group consisting of a methoxymethyl group-containing polymer, a hydroxyl group-containing polymer, a carboxyl group-containing polymer, and an amino group-containing polymer.

**12.** The thermal transfer sheet according to any one of claims 7 to 11, wherein
the thermal transfer sheet is used for heat bonding.

**13.** A laminate, comprising:

the thermal transfer sheet according to any one of claims 7 to 12, and
a resin member laminated on a side of the thermal transfer layer of the thermal transfer sheet.

**14.** The laminate according to claim 13, wherein
the resin member is a prepreg.

FIG. 1

— 10
— 100

FIG. 2

200

— 20
— 10

FIG. 3

FIG. 4

**FIG. 5**

**FIG. 6**

### INTERNATIONAL SEARCH REPORT

| International application No. |
| --- |
| PCT/JP2020/010939 |

**A. CLASSIFICATION OF SUBJECT MATTER**
B44C 1/17(2006.01)i; C09D 5/00(2006.01)i; C09D 201/00(2006.01)i; B32B 37/26(2006.01)i
FI: B44C1/17 E; B32B37/26; C09D5/00 D; C09D201/00
According to International Patent Classification (IPC) or to both national classification and IPC

**B. FIELDS SEARCHED**

Minimum documentation searched (classification system followed by classification symbols)
B44C1/16-1/175; B32B1/00-43/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2010-230700 A (FUJI XEROX CO., LTD.) 14.10.2010 (2010-10-14) examples 1-2 | 1-10, 12-13<br>11, 14 |
| X<br>Y | JP 2015-189043 A (DAINIPPON PRINTING CO., LTD.) 02.11.2015 (2015-11-02) example 1, paragraphs [0021], [0024], [0047] | 1-5, 7-10, 12-13<br>6, 11, 14 |
| X<br>Y<br>A | WO 2018/061741 A1 (FUJIFILM CORPORATION) 05.04.2018 (2018-04-05) examples 1-11 | 1-4, 7-13<br>14<br>5-6 |
| A | JP 2014-12398 A (NIPPON SODA CO., LTD.) 23.01.2014 (2014-01-23) | 1-14 |
| A | JP 2019-6086 A (DAINIPPON PRINTING CO., LTD.) 17.01.2019 (2019-01-17) | 1-14 |
| A | JP 2014-175116 A (DAICEL CORPORATION) 22.09.2014 (2014-09-22) | 1-14 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 June 2020 (04.06.2020) | 16 June 2020 (16.06.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

### INTERNATIONAL SEARCH REPORT
Information on patent family members

International application No.

PCT/JP2020/010939

| Patent Documents referred in the Report | Publication Date | Patent Family | Publication Date |
|---|---|---|---|
| JP 2010-230700 A | 14 Oct. 2010 | (Family: none) | |
| JP 2015-189043 A | 02 Nov. 2015 | (Family: none) | |
| WO 2018/061741 A1 | 05 Apr. 2018 | US 2019/0217602 A1 examples 1-11 CN 109789720 A | |
| JP 2014-12398 A | 23 Jan. 2014 | WO 2013/183558 A1 CN 104334348 A KR 10-2015-0016266 A | |
| JP 2019-6086 A | 17 Jan. 2019 | WO 2019/003843 A1 | |
| JP 2014-175116 A | 22 Sep. 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000226536 A
- JP 2017128722 A
- JP 2012197427 A

- JP 2019068826 A
- JP 2019193739 A